(19) Europäisches Patentamt
European Patent Office
Office européen des brevets

(11) Publication number: **0 154 393**
**B1**

(12) # EUROPEAN PATENT SPECIFICATION

(45) Date of publication of patent specification: **18.04.90**

(51) Int. Cl.⁵: **F 02 D 41/18,** F 02 D 21/08

(21) Application number: **85300394.5**

(22) Date of filing: **21.01.85**

(54) **Fuel control system for internal combustion engine.**

(30) Priority: **19.01.84 JP 8329/84**

(43) Date of publication of application:
**11.09.85 Bulletin 85/37**

(45) Publication of the grant of the patent:
**18.04.90 Bulletin 90/16**

(84) Designated Contracting States:
**DE GB IT**

(56) References cited:
**EP-A-0 044 873**
**EP-A-0 119 377**
**DE-A-3 230 829**
**FR-A-2 436 881**
**GB-A-2 120 390**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Kanno, Yoshiaki**
**451-39, Onoe-cho Kuchiri**
**City of Kakogawa Hyogo Prefecture (JP)**
Inventor: **Nishimura, Yukinobu Room no.212**
**"Mitsubishi Apartment" 155, Yamanoi-cho**
**City of Himeji Hyogo Prefecture (JP)**

(74) Representative: **Lawson, David Glynne et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 154 393 B1

**Description**

Background of the invention

This invention relates to a fuel control system for an internal combustion engine, and in particular to a fuel control system for an internal combustion engine wherein a true inlet air flow rate is detected for the engine control by taking account of a blow-back air flow rate.

Hitherto, numerous systems for detecting the inlet air flow rate of an internal combustion engine for an automobile have been proposed, in which a vane system for detecting an inlet air flow rate by detecting a dynamic air pressure based on the inclination of a movable vane, a system using von Karman's vortex street for detecting an inlet air flow rate based on the frequency of the vortex, a hot-wire system for detecting an inlet air flow rate by utilizing the variation of the resistance of the hot-wire, and the like are practically used.

However, those inlet air flow rate detection systems have encountered the pulsation and the blow-back phenomenon of the inlet air in the vicinity of the full air inlet condition during a low engine speed. This blow-back phenomenon is effected when a counter air flow is caused from a cylinder of the engine to the inlet pipe in the case where the operations of the inlet valve and the exhaust valve of the engine are overlapped as shown by the hatched portion in Fig. 1B in relation to the motion of each of the pistons of the cylinders shown in Fig. 1A. When only the inlet valve is opened, the counter air flow will be again sucked into the engine. Due to this counter air flow, the true air flow rate can not be detected. Therefore, such inlet air flow rate detection systems as indicated above are easily influenced, depending upon the timing of the valves or the contour of the inlet pipe, in a region where the engine speed is below 2000 rpm and the pressure in the inlet pipe is above −50 mmHg with respect to the atmosphere. Particularly, since a hot-wire system generates a signal irrespective of the direction of the air flow as shown in Fig. 2B, it is hard to distinguish such a blow-back air flow rate over such an air flow rate at the time of suction.

On the other hand, as other conventional fuel control systems for an internal combustion engine, for example, a system for presetting a blow-back period according to the crank angle of the engine, or a thermal sensor system for detecting the direction of the air flow as disclosed in Japanese Patent Application Laid-Open No. 56-108909 (EP—A—44873) has been published. However, both of these fuel control systems have disadvantageously complicated and expensive arrangements.

A previously proposed fuel control system is described in European Patent Specification NO EP—A—119 377. This document describes a fuel control system comprising an air flow rate sensor and a fuel control means. The control means is operative for compensating for sensed reverse air flow occurring in the system.

One of the methods of compensating for sensed reverse air flow is to determine the gradient of the sensor output signal, and to detect reverse air flow periods on the basis of this gradient. The sensor output signal is sampled so that successive values can be compared. Once the flow rates, measured within and outside of the detected reverse air flow period, have been determined, then the actual air flow intake can be calculated by subtraction.

This European Patent Specification is relevant against the present invention under Article 54(3) EPC only in so far as it relates to the United Kingdom and the Federal Republic of Germany.

GB patent specification 2 120 390 describes a fuel control system for an internal combustion engine comprising a hot-wire air flow sensor for detecting engine intake air flow and providing a corresponding output signal, control means for controlling the rate of fuel supplied to the engine on the basis of the output signal and the engine speed. The system compensates for reverse air flow on the basis of the determination of two minimum sensor signals between predetermined crank angles. During the time of actual reverse flow the voltage applied to a calculator which calculates the intake air flow is reversed so as to compensate for reverse air flow.

It is accordingly an object of the invention to provide a fuel control system for an internal combustion engine having a simple and inexpensive arrangement.

It is a specific object of the invention to provide a fuel control system for an internal combustion engine capable of determining, when a blow-back air flow occurs between a true air flow rate SQ from air flow rate at the time of suction outside the blow-back region, and a blow-back air flow rate during the blow-back period determined from the output signal of a hot-wire type air flow rate sensor thereby to correct for the blow-back flow rate in the vicinity of such a condition where the throttle valve is fully opened during a low engine speed.

According to the present invention, there is provided a fuel control system for an internal combustion engine, comprising a hot-wire air flow rate sensor for detecting engine intake air flow and providing a corresponding output signal, control means for controlling the rate of fuel supply to the engine on the basis of the said output signal and the engine speed, the control means including compensating means to compensate for sensing of reverse air flow, wherein the compensating means determines the gradient of the sensor signal (V) and detects reverse air flow periods on the basis of the determination of two reversals of the gradient from a negative one to a positive one between predetermined crank angles or during a predetermined time interval, and the control means computes the engine inlet air flow rate from the air flow rates (Qa, Qc; Qb) measured within and outside the detected reverse air flow periods, characterised in that:

said corresponding output signal is in the form of a voltage corresponding to said inlet air flow rate;

the compensating means comprises a sampling

means for sampling the output of said sensor during a predetermined time interval or a predetermined crank angle and providing an output Vi, and a determination means for determining said two reversals of the gradient from the output Vi of said sampling means of an air flow rate Qi;

the control means comprises a converting means for converting the output Vi of said sampling means into an air flow rate Qi, a computing means for computing an average inlet air flow rate Qo, and a control circuit for controlling the fuel supply amount for the engine on the basis of said inlet air flow rate Qo and the rotational speed of the engine;

said computing means includes correction means for computing said inlet air flow rate Qo, thereby to correct the fuel supply amount, according to the following relationship;

$$(SMQ-SPQ)/DN.$$

where: SMQ is an addition of N sampled values of the air flow rate Qi at the time of suction outside the reverse air flow periods;

SPQ is an addition of N sampled values of the air flow rate Qi at the time of suction during the reverse air flow periods; and

the correction means performs said correction when the engine speed is below a predetermined value and when the ratio Qo/R, of said average inlet air flow rate Qo and said engine speed R, is above a predetermined value, the computing means including a coolant temperature sensor for sensing the temperature of the coolant for the engine to provide the temperature signal used as a coefficient for the calculation of said ratio Qo/R.

Brief description of the drawings

Figures 1A and 1B show waveform diagrams of the motion of each piston of an engine and an inlet air flow for the engine in relation to the piston motion;

Figures 2A and 2B show waveform diagrams of the motion of each piston of an engine and of the output signal of a hot-wire type inlet air flow rate sensor in relation to the piston motion;

Figure 3 shows a functional block waveform of one embodiment of a fuel control system for an internal combustion engine according to this invention;

Figure 4 shows a hardware block diagram of Figure 3;

Figure 5 shows an output characteristic diagram of the hot-wire type inlet air flow rate sensor;

Figures 6 and 7 show flow charts for explaining the operation of the fuel control system in Figures 3 and 4;

Figures 8A-8G show waveform diagrams illustrating the operations of Figures 6 and 7 in the presence of a blow-back phenomenon;

Figures 9A-9G show waveform diagrams illustrating the operations of Figures 6 and 7 in the absence of a blow-back phenomenon;

Figure 10 shows a main flow chart for calculating the driving time of an injector used in Figure 4;

Figure 11 shows a hardware block diagram of another embodiment of the fuel control system for an internal combustion engine according to this invention; and

Figure 12 shows a flat chart for explaining the operation of Figure 11.

Throughout the figures, the same reference numerals indicate identical or corresponding portions.

The present invention will now be described in detail with reference to the accompanying drawings illustrating the preferred embodiments of this invention.

In the present apparatus, blow-back is detected on the basis of the gradient of the signal from the hot-wire air flow rate sensor (AFS) 5. As can be seen from Figure 2b, this signal Va corresponds to the magnitude of the air flow (Figure 1b) with a time lag. Consequently, the sensor signal consists of primary peaks corresponding to the maximum intake air flow rate, and intervening secondary peaks corresponding to the maximum counterflow rate of air during the block-back period tb. The signal has minima, that is to say the gradient of the signal changes from negative to positive, at points corresponding to the reversal of air flow from intake to blow-back and from blow-back to intake, that is to say, where the air flow is smallest in magnitude. The present apparatus detects the presence of blow-back by detecting the reversals in the gradient of the signal corresponding to the minima and uses this information to determine flow Qb during blow-back and the flow Qa plus Qc during the rest of the piston stroke. The correct air flow rate than corresponds to (Qa+Qc−Qb).

The gradient of the signal is determined by sampling the signal and comparing successive sampled values to determine whether the signal is decreasing or increasing.

Figure 3 shows a block diagram of a fuel injection control system for an internal combustion engine, embodying the invention.

Figure 4 shows a corresponding digital system in block form. These drawings show an internal combustion engine 1 having mounted thereon a coolant temperature sensor 2 and a crank angle sensor 3. The sensor 2 provides as an output therefrom a coolant temperature detection signal dependent on the temperature of the cooling water (coolant) for the engine 1, that is, it may specifically be a thermistor which varies its resistance dependent on the coolant temperature. The sensor 3 detects the top dead center (TDC) of each of the pistons of the engine 1 and provides as an output therefrom a crank angle detection signal shown in Fig. 2A. Each of the cylinders of the engine 1 includes injectors 4 which are operated by a drive control signal, which will be hereinafter described, for controlling the amount of fuel supplied to the engine 1. A hot-wire type air flow rate sensor (hereinafter abbreviated as AFS) 5 detects an air flow rate Q (Q1, Q2, Q3,...) sucked into the engine 1 and provides as an

output therefrom a sensor output voltage V (V1, V2, V3...) depending on the detected air flow rate as indicated in Fig. 5. The sensor output voltage V of the AFS 5 is sampled per e.g. 1 msec by a sampling circuit 6 which in turn provides as an output therefrom a sampled voltage Vi. The sampling circuit 6 is connected to a converting circuit 7 which converts the sampled voltage Vi output from the sampling circuit 6 into an inlet air flow rate Qi corresponding to the voltage Vi. The sampled voltage Vi is also received as an input by a determination circuit 8 in which an error is derived between adjacent ones of the sampled voltages Vi to determine whether or not said error corresponds to a blow-back period and then to provide as an output therefrom a corresponding blow-back period indicative signal. It is to be noted that the determination circuit 8 may directly use the inlet air flow rate Qi instead of the sampled voltage Vi. The inlet air flow rate Qi from the converting circuit 7, the blow-back period indicative signal from the determination circuit 8, and the crank angle signal from the sensor 3 are together connected to a computing circuit 9 which determines the blow-back period and the suction period and calculates a true inlet air flow rate to provide as an output therefrom an inlet air flow rate signal. A control circuit 10 responds to the inlet air flow rate signal from the computing circuit 9 to send the above noted drive control signal corresponding to the inlet flow rate signal to the injector 4, thereby controlling the driving period of the injector 4 to adjust the amount of fuel supplied to the engine 1 from the injector 4. It is to be noted that the sampling timing may be provided per a predetermined crank angle.

There are also shown in Fig. 3 an air cleaner 11, an inlet pipe 12, and a throttle valve 13 which are well known in the art.

The sampling circuit 6, the converting circuit 7, the determination circuit 8, the computing circuit 9, and the control circuit 10 together form a control unit 14 whose input terminal 14a receives the sensor output voltage V of the AFS 5, whose input terminal 14b receives a coolant temperature indicative signal from the coolant temperature sensor 2, whose input terminal 14c receives the crank angle indicative signal of the crank angle sensor 3, and whose output terminal 14d provides the driving control signal.

In Fig. 4, the control unit 14 is shown in a hardware form, different from Fig. 3, including a filter 15 connected to the input terminal 14a, an analog-digital (A/D) converter 16 connected to the filter 15, an interface 17 connected to the input terminal 14b to convert the coolant temperature signal from the sensor 2 into a voltage signal, an A/D converter 18 connected to the interface 17, a waveform shaper 19 connected to the input terminal 14c, a counter 20 connected to the waveform shaper 19 to measure the time interval between adjacent TDC's at each time of TDC is detected in the engine 1, and a timer 21 generating an interrupt signal per e.g. 1 msec. The A/D converters 16 and 18, the waveform shaper 19, the counter 20, and the timer 21 are connected to a micro-computer 22 which includes wherein a ROM 23 and a RAM 24 and has interrupt terminals 22a and 22b respectively connected to the waveform shaper 19 and the timer 21. The micro-computer 22 calculates the driving time of the injector 4 corresponding to a fuel supply amount dependent on the operating condition of the engine 1 in accordance with a program previously stored in the ROM 23 on the basis of various input information, sets the driving time in the timer 25 connected to the output terminal 22c of the micro-computer 22, and provides a trigger signal to the timer 25 in response to the crank angle indicative signal. The timer 25 is connected to a driver circuit 26 whose output terminal is connected to the output terminal 14d of the control unit 14.

The operation of the fuel control system for an internal combustion engine thus arranged will now be described with reference to Fig. 6 showing a flow chart executed in the case where the interrupt terminal 22b of the micro-computer (hereinafter abbreviated as CPU) 22 receives as an input therein an interrupt signal per 1 msec, Fig. 7 showing a flow chart executed in the case where an interrupt signal is provided from the sensor 3 at the interrupt terminal 22a of the CPU 22, and Figs. 8A-8G showing various waveforms when a blow-back air flow occurs as well as Figs. 9A-9G showing various waveforms when no blow-back air flow occurs.

When an interrupt signal is input per 1 msec from the timer 21 to the interrupt terminal 22b of the CPU 22 as shown in Fig. 8C, the output voltage signal of the AFS 5 is converted into a digital value in Step S1 of Fig. 6 as shown in Fig. 8B. In Step S2, the converted digital value is stored as VQ1 in the RAM 24. In Step S3, it is determined whether or not the frequency (number of times) of the sampling of the output signal of the AFS 5 (Fig. 8B) exceeds a certain number, for example 64. If it exceeds 64, then the interrupt program will be exited without executing the steps described hereinbelow. If it does not exceed 64, then the sampling frequency N is increased by "one" in Step S4. Then in Step S5, it is checked whether or not the operating condition of the engine resides in a so-called blow-back zone. In the case where it is determined that the engine is in the blow-back zone indicating that a flag FR provided in the RAM 24 is 1, the program proceeds to Step S6 while otherwise (flag FR=0) the process proceeds to of Step S13. It is to be noted that the above-mentioned previously determined blow-back zone is formed of the engine speed below a predetermined value (e.g. 1500 rpm) and of the engine load (ratio of average air flow rate to engine rotation) above a predetermined value (e.g. −200 mmHg boost pressure).

In Step S6, it is checked whether the gradient at the time of the last sampling of the output signal of the AFS 5 (Fig. 8B) is positive or negative. If it is negative, then the Step S7 is executed while otherwise Step S11 is executed. In Step S7, it is determined whether or not a deviation

(VQ1−VQ2) between the present sampled value (VQ1) of the output signal of the AFS 5 and the last sampled value (VQ2) which was obtained 1 msec before is larger than a predetermined value A. If at Step S7 it is determined that (VQ1−VQ2)≥A, implying that the gradient has reversed from a negative one to a positive one, the program proceeds to Step S8, where the present sampled value (VQ1) is compared with a predetermined value, for example, the mean value (VQo) of the sampled values of the output voltage of the AFS 5. If at Step S8 it is determined that VQ1<VQo, the program proceeds to Step S9 where a gradient flag (FG) provided in the RAM 24 is set to zero (positive gradient) as indicated in Fig. 8D. Next, in Step S10 a reverse flag (FN) provided in the RAM 24 is reversed at time point t2 as shown in Fig. 8E. If it is found in Step S7 that VQ1−VQ2<A or in Step S8 that VQ1≥VQo, then the program proceeds to Step S13. If it is found in Step S6 that the last gradient is positive (flag FG=0), then it is checked in Step S11 whether or not VQ2−VQ1≥A. If it is the case, then in Step S12 the gradient flag (FG) will be set to 1 (negative). Otherwise, the program proceeds to Step S13.

In Step S13, the last sampled value (VQ2) of the output of the AFS 5 stored in the RAM 24 is substituted (updated) by the present sampled value (VQ1) of the output of the AFS 5. Then in Step S14, the present sampled value (VQ1) of the output of the AFS 5 is converted into an inlet air flow rate in accordance with the data of the characteristic curve shown in Fig. 5 which is also stored in the RAM 24, and the converted data is stored as a flow rate Q1 in the RAM 24.

A value SMQ represents the integrated air flow during the period when the reverse flag FN is equal to zero.

In the case where blow-back exists between TDC's, the value SMQ represents the integrated air-flow outside the blow-back zone, that is, when FN=0 (see Figure 8F). In terms of the TDC's, the value SMQ represents the integrated air flow during two periods: a) one of which lasts until the gradient of the output of the air flow sensor (AFS 5) changes from minus to plus; and b) the other of which lasts from the second change of the gradient of the output of the AFS 5 from minus to plus to the next TDC.

In the case where there is no blow-back occurring between TDC's, as illustrated in Figures 9 to 9G, the value SMQ still represents the integrated air flow during the period when the reverse flag FN is equal to zero. In terms of the TDC's, the value SMQ represents in this case, the air flow during a single period lasting from the TDC until the gradient of the output of the AFS changes from minus to plus.

At Step S15, it is determined whether the reverse flag (FN) is 1 or 0. If this flag is 0, then it is indicated that the air flow is outside any blow-back zone. Then in step S16, integrated data (SMQ), stored in a memory area provided in the RAM 24, is added with the flow rate (Q1) to obtain total integrated data (SMQ) outside any blow-back zone, shown in Fig. 8F.

On the other hand, if in Step S15 the flag (FN) is 1, indicating that there may be a blow-back air flow occurring, the program proceeds to Step S18 where integrated data SPQ (representing the total blow-back air flow during the supposed blow-back period), stored in a memory area provided in the RAM 24 is added with the flow rate (Q1) to obtain the integrated data (SPQ) shown in Fig. 8G. Then in Step S17, the above sampled value (VQ1) is added to integrated voltage data (SV1) stored in a memory area provided in the RAM 24, whereby one interrupt processing per 1 msec has been completed.

When the output signal from the crank angle sensor 3 shown in Fig. 8A is inputed as an interrupt signal to the interrupt terminal 22a of the CPU 22, in Step 520 shown in Fig. 7 the count value of the counter 20 is read out by the CPU 22 and stored in the RAM 24, which is representative of a period (TR) between TDC outputs of the crank angle sensor 3 and indicative of the engine speed. Then in Step 21, the timer 25 for determining the driving time of the injector 4 is triggered to provide an output pulse corresponding to preset numerical values. The output pulse drives the injector 4 through the driver circuit 26.

It is then checked in Step S22 whether the reverse flag (FN) obtained in Step S10 in Fig. 6 is 1 or 0. If it is 0, at the TDC's, the presence of a blow-back air flow between TDC's is indicated. This means that, since a blow-back has occurred between TDC's, the integrated data SPQ relates to the total air flow during the blow-back. The program then proceeds to Step S23, where a true inlet air flow rate

$$(SQ)=(SMQ)-(SPQ)$$

is determined from the integrated data (SPQ) and (SMQ) obtained in Steps S16 and S18 in Fig. 6 and shown in Figs. 8F and 8G.

If the reverse flag is 1 at the TDC's, then this means that there has been no blow-back between TDC's, and so the integrated data SPQ does not represent blow-back air flow (see Figs. 9E and 9G). The program then proceeds to Step S24 where a true inlet air flow rate

$$(SQ)=(SMQ)+(SPQ)$$

is determined as there is no blow-back air flow. Then in Step S25, the total sampling frequency N on the integrated data (SMQ) and (SPQ) is stored as (DN) in the RAM 24, and in Step S26 the integrated voltage data (SV1) of Step S17 in Fig. 6 is stored as (SV) in the RAM 24. Then in Step S27, the sampling frequency (N), the integrated data (SMQ) and (SPQ) and the integrated voltage data (SV1) are all cleared.

In Step S28, the engine speed (R) calculated from the TDC period (TR) is compared with a predetermined value KR. If the step S28 it is

determined that R<KR, the program proceeds to Step S29 where an inlet air flow rate (AN) per one engine rotation is compared with a predetermined value KA. If it is found in Step S28 that the engine speed (R) is smaller than the predetermined value KR and if it is found in Step S29 that the inlet air flow rate (AN) is smaller than the predetermined value KA, the program proceeds to Step S30, where the blow-back zone flag (FR) is set to 1 while otherwise the proceeds to Step S31 where the blow-back zone flag (RF) is cleared to 0. It is to be noted that the inlet air flow rate (AN) per one engine rotation is a parameter corresponding to the engine load and proportional to the load. Namely in Steps S28—S31, the blow-back zone flag (FR) is set only when the engine speed is below a predetermined value and the engine load is above a predetermined value.

Thus, the program shown in Fig. 7 is executed at time point t1 (TDC) while the previous data is stored in the RAM 24 and each of the data is initially set. During the time interval between the time points t1 and t2, since the gradient of the output of the AFS 5 is negative as shown in Fig. 8B, the output of the AFS 5 is instantaneously converted into an inlet air flow rate (Q1) at the time of the occurrence per 1 msec of the interrupt signal shown in Fig. 8C in Steps S1, S2, and S14 of Fig. 6 and sequentially integrated as the integrated data (SMQ). At the time point t2, it is determined in Steps S6-S10 that the gradient of the output of the AFS 5 has first reversed from the negative value to the positive value under the average voltage (VQo) shown in Fig. 8B whereby the reverse flag (FN) is made 1 as shown in Fig. 8E. Also the same determination is made at the time point t4 whereby the inlet air flow rate (Q1) is integrated as the integrated data (SPQ) until the reverse flag (FN) is reversed to 0, namely until the second reversion of the gradient. During the time interval between the time points t4 and t6 shown in Fig. 8B, the inlet air flow rate (Q1) is integrated with the integrated data (SMQ) in Step S16 in Fig. 6 to obtain the corresponding suction air flow rate. Therefore, when the blow-back phenomenon occurs, the reverse flag (FN) is changed from 0 to 1 at the time points t2 and t4 whereby in Step S23 of Fig. 7 the blow-back amount (SPQ) during the blow-back time interval is subtracted from the inlet air flow rate (SMQ) between TDC's except for the blow-back interval according to the calculation

$$(SQ)=(SMQ)-(SPQ).$$

Next, the description will be made with reference to the case where no blow-back phenomenon occurs along Figs. 9A-9G.

It is firstly to be noted that at the time point t7 shown in Fig. 9A, the crank angle indicative signal from the sensor 3 is inputed to the interrupt terminal 22a of the CPU 22. During the time interval of t7-t8, the inlet air flow rate (Q1) is integrated with the integrated data (SMQ) shown in Fig. 9F, and during the time interval of t8-t9, the inlet air flow rate (Q1) is integrated with the integrated data (SPQ) shown in Fig. 9G. At the time point t9, because of the reverse flag (FN) being "1", an inlet air flow rate during the time interval of t7-t9 from the relationship

$$(SQ)=(SMQ)+(SPQ)$$

can be determined according to Steps S22 and S24 in Fig. 7.

Fig. 10 shows a flow chart for calculating the driving time of the injector 4. In Step S40, the internal data of the control unit 14 is initialized. Then in step S41, an average inlet air flow rate (Q0) is obtained from the relationship

$$(Qo)=(SQ)/(DN)$$

determined by the inlet air flow rate (SQ) (Step S23, S24 of Fig. 7) and the sampling frequency (DN) (Step S25 of Fig. 7), between predetermined crank angles detected by the crank angle sensor 3, stored in the RAM 24 according to the execution of the program of Fig. 7. Then in Step S42, the average voltage (VQo) use in Step S8 of Fig. 6 is obtained from the relationship

$$(VQo)=(SV)/(DN)$$

determined by the integrated voltage data (SV) and the stored sampling frequency (DN). Then in Step S43, the rotational speed (R) of the engine 1 is obtained according to the relationship (R)=K1/(TR) determined by the period (TR) and a predetermined constant K1. Then in Step S44, the A/D converter 18 converts the coolant temperature signal from the sensor 2 into a digital signal. Then in Step S45, the converted digital signal is stored a coolant temperature indicative data (DWT) in the RAM 24. In Step S46, the driving time Td is obtained according to the relationship Td=K3(Qo)/(R) determined by a constant K3, the average inlet air flow rate (Qo), and the engine speed (R). Then in Step S47, correction is made according to the relationship

$$Td=Td \cdot f2(DWT)$$

determined by a coeffcient f2 previously stored in the RAM 21. Then in Step S48, the inlet air flow rate (AN) per one engine rotation is obtained from the relationship

$$(AN)=K4 \cdot (Qo)/(R)$$

determined by a constant K4, the average inlet air flow rate (Qo), and the engine speed (R), and in Step S49 the driving time Td is set in the timer 25. Then the program returns to Step S41 for the repetitive operation.

While it has been described that the blow-back zone is determined in Step S5 of Fig. 6 by the ratio (AN) of the engine speed (R) to the inlet air flow rate (VQo), this determination may be done by the provision of a throttle opening sensor 27 for

detecting the opening of the throttle valve 13 and by sending the opening indicative signal to the CPU 22 through an interface 28 and an A/D converter 29 as shown in Fig. 11. Ths corresponding program to be executed by flow of the CPU 22 is shown in Fig. 12 in which the same steps as Steps S20-S28 in Fig. 7 are similarly executed. Then in Step S32, the opening of the throttle valve 13 is converted into a digital signal by an A/D converter 29 and thereafter in Step S33 it is checked whether or not the throttle opening θ is larger than a predetermined value Kθ. If it is the case, Step S34 is executed while otherwise Step S35 is executed.

Also while it has been described that the output voltage of the AFS 5 is processed on the basis of the crank angle indicative signal of the crank angle sensor 3, the output voltage of the AFS 5 may be processed on the basis of a signal in the primary of an ignition coil (not shown) at the time of ignition of the engine 1 by using a conventional distributor for controlling the ignition time of the engine 1. Furthermore, the determination Step S8 of Fig. 6 may be executed on the basis of the average inlet air flow rate (Qo), and a value used for this determination may be a constant.

As set forth in the above, the fuel control system for an internal combustion engine according to this invention can exactly detect an inlet air flow rate without providing a particular apparatus for detecting such a blow-back phenomenon, resulting in a simple structure and a low cost. Moreover, since a zone in which a blow-back processing is performed is defined by an engine speed, a ratio of an inlet air flow rate and the engine speed, etc., to determine the blow-back output waveform of the AFS, it is advantageous that the blow-back air flow rate can be surely determined.

**Claims**

1. A fuel control system for an internal combustion engine (1), comprising a hot-wire air flow rate sensor (5) for detecting engine intake air flow and providing a corresponding output signal, control means (14) for controlling the rate of fuel supply to the engine on the basis of the said output signal and the engine speed, the control means including compensating means to compensate for sensing of reverse air flow, wherein the compensating means (6, 8) determines the gradient of the sensor signal (v) and detects reverse air flow periods on the basis of the determination of two reversals of the gradient from a negative one to a positive one between predetermined crank angles or during a predetermined time interval, and the control means (14) computes the engine inlet air flow rate from the air flow rates (Qa, Qc; Qb) measured within and outside the detected reverse air flow periods, characterised in that:

said corresponding output signal is in the form of a voltage corresponding to said inlet air flow rate;

the compensating means comprises a sampling means (6) for sampling the output of said sensor during a predetermined time interval or a predetermined crank angle and providing an output Vi, and a determination means (8) for determining said two reversals of the gradient from the output Vi of said sampling means or an air flow rate Qi;

the control means (14) comprises a converting means (7) for converting the output Vi of said sampling means into an air flow rate Qi, a computing means (9) for computing an average inlet air flow rate Qo, and a control circuit (10) for controlling the fuel supply amount for the engine on the basis of said inlet air flow rate Qo and the rotational speed R of the engine; said computing means includes correction means for computing said inlet air flow rate Qo, thereby to correct the fuel supply amount, according to the following relationship;

$$(SMQ-SPQ)/DN,$$

where: SMQ is an addition of N sampled values of the air flow rate Qi at the time of suction outside the reverse air flow periods (DN is a numerical factor);

SPQ is an addition of N sampled values of the air flow rate Qi at the time of suction during the reverse air flow periods; and

the correction means performs said correction when the engine speed is below a predetermined value and when the ratio Qo/R, of said average inlet air flow rate Qo and said engine speed R, is above a predetermined value, the computing means including a coolant temperature sensor (2) for sensing the temperature of the coolant for the engine to provide the temperature signal used as a coefficient for the calculation of said ratio Qo/R.

2. A fuel control system for an internal combustion engine as claimed in claim 1 characterised in that said correction means performs said correction when the opening of a throttle valve disposed in the course of the inlet pipe of the engine is above a predetermined degree.

3. A fuel control system for an internal combustion engine as claimed in any of claims 1 and 2 characterised in that said determination means performs said determination only when the output Vi of said sampling means is below a predetermined value.

4. A fuel control system for an internal combustion engine as claimed in any of claims 1, 2 or 3 characterised in that said determination means performs said determination only when said inlet air flow rate Qi is below a predetermined value.

5. A fuel control system for an internal combustion engine as claimed in any of claims 1 to 4 characterised in that said sampling means includes a timer (21) generating one interrupt signal per a predetermined time interval to sample the output of said sensor.

6. A fuel control system for an internal combustion engine as claimed in any of claims 1 to 5 characterised in that said computing means includes a crank angle sensor (3) for sensing a top

dead center of the engine and a counter (20) initiated by a signal from said crank angle sensor to measure the time interval of predetermined crank angles of the engine.

7. A fuel control system for an internal combustion engine as claimed in any of claims 1 to 6 wherein said computing means includes a read only memory (23) having stored therein a program to calculate said fuel supply amount in response to the operating condition of the engine.

**Patentansprüche**

1. Kraftstoffregelsystem für eine Brennkraftmaschine (1), umfassend einen Hitzdraht-Luftdurchflußmengensensor (5) zum Erfassen des Ansaugluftstroms und Erzeugung eines entsprechenden Ausgangssignals, eine Regeleinheit (14), die die Kraftstoffzufuhrmenge zur Maschine auf der Grundlage dieses Ausgangssignals und der Maschinendrehzahl regelt, wobei die Regeleinheit eine Ausgleichseinheit aufweist, die einen erfaßten Luftrückstrom ausgleicht, wobei die Ausgleichseinheit (6, 8) den Gradienten des Sensorsignals (v) bestimmt und auf der Grundlage der Bestimmung von zwei Umkehrungen des Gradienten von Negativ zu Positiv zwischen vorbestimmten Kurbelwinkeln oder während eines vorbestimmten Zeitintervalls Luftrückstromperioden erfaßt, und die Regeleinheit (14) aus den innerhalb und außerhalb der erfaßten Luftrückstromperioden gemessenen Luftdurchflußmengen (Qa, Qc; Qb) die Ansaugluftdurchflußmenge berechnet, dadurch gekennzeichnet, daß:

das entsprechende Ausgangssignal eine der Ansaugluftdurchflußmenge entsprechende Spannung ist;

die Ausgleichseinheit ein Abtastgleid (6) zum Abtasten des Ausgangs des Sensors während eines vorbestimmten Zeitintervalls oder eines vorbestimmten Kurbelwinkels und Erzeugung eines Ausgangssignals Vi sowie ein Bestimmungsglied (8) aufweist, das die beiden Umkehrungen des Gradienten aus dem Ausgangssignals Vi des Abtastglieds oder einer Luftdurchflußmenge Qi bestimmt;

die Regeleinheit (14) aufweist: einen Wandler (7), der das Ausgangssignal Vi des Abtastglieds in eine Luftdurchflußmenge Qi umwandelt, einen Rechner (9), der eine durchschnittliche Ansaugluftdurchflußmenge Qo berechnet, und ein Regelglied (10), das die Kraftstoffzufuhrmenge für die Maschine auf der Grundlage der Ansaugluftdurchflußmenge Qo und der Drehzahl R der Maschine regelt;

wobei der Rechner Korrekturmittel zum Berechnen der Ansaugluftdurchflußmenge Qo aufweist, um dadurch die Kraftstoffzuführmenge nach folgender Beziehung zu korrigieren:

$$(SMQ-WPQ)/DN,$$

wobei SMQ eine Summe von N abgetasteten Werten der Luftdurchflußmenge Qi zum Ansaugzeitpunkt außerhalb der Luftrückstromperioden ist (DN ist ein Zahlenfaktor),

SPQ eine Summe von N abgetasteten Werten der Luftdurchflußmenge Qi zum Ansaugzeitpunkt während der Luftrückstromperioden ist; und

das Korrekturmittel eine Korrektur durchführt, wenn die Maschinendrehzahl unter einem vorbestimmten Wert liegt und wenn das Verhältnis Qo/R der durchschnittlichen Ansaugluftdurchflußmenge Qo und der Maschinendrehzahl R über einem vorbestimmten Wert liegt,

wobei der Rechner einen Kühlmitteltemperatursensor (2) aufweist, der die Temperatur des Kühlmittels für die Maschine erfaßt und ein Temperatursignal liefert, das als Koeffizient für die Berechnung des Verhältnisses Qo/R dient.

2. Kraftstoffregelsystem für eine Brennkraftmaschine nach Anspruch 1, dadurch gekennzeichnet, daß das Korrekturmittel die Korrektur durchführt, wenn der Öffnungsgrad einer im Ansaugrohr der Maschine angeordneten Drosselklappe einen vorbestimmten Wert überschreitet.

3. Kraftstoffregelsystem für eine Brennkraftmaschine nach einem der Ansprüche 1 und 2, dadurch gekennzeichnet, daß das Bestimmungsglied die Bestimmung nur dann durchführt, wenn das Ausgangssignal Vi des Abtastglieds unter einem vorbestimmten Wert liegt.

4. Kraftstoffregelsystem für eine Brennkraftmaschine nach einem der Ansprüche 1, 2 oder 3, dadurch gekennzeichnet, daß das Bestimmungsglied die Bestimmung nur dann durchführt, wenn die Ansaugluftdurchflußmenge Qi unter einem vorbestimmten Wert liegt.

5. Kraftstoffregelsystem für eine Brennkraftmaschine nach einem der Ansprüche 1 bis 4, dadurch gekennzeichnet, daß das Abtastglied einen Zeitgeber (21) aufweist, der pro vorbestimmten Zeitintervall ein Unterbrechungssignal erzeugt, um den Ausgang des Sensors abzutasten.

6. Kraftstoffregelsystem für eine Brennkraftmaschine nach einem der Ansprüche 1 bis 5, dadurch gekennzeichnet, daß der Rechner einen Kurbelwinkelsensor (3), der einen oberen Totpunkt der Maschine erfaßt, sowie einen Zähler (20) aufweist, der von einem Signal des Kurbelwinkelsensors angestoßen wird, das Zeitintervall vorbestimmter Kurbelwinkel der Maschine zu messen.

7. Kraftstoffregelsystem für eine Brennkraftmaschine nach einem der Ansprüche 1 bis 6, wobei der Rechner einen Festspeicher (23) mit einem darin gespeicherten Programm zur Berechnung der Kraftstoffzufuhrmenge in Abhängigkeit vom Betriebszustand der Maschine aufweist.

**Revendications**

1. Système de commande de carburant pour moteur à combustion interne (1), comprenant un détecteur de taux d'écoulement d'air à sonde chaude (5) pour détecter l'écoulement d'air à l'entrée du moteur et fournir un signal de sortie correspondant, un moyen de contrôle (14) pour

contrôler le taux d'alimentation en carburant du moteur sur la base dudit signal de sortie ainsi que de la vitesse du moteur, le moyen de contrôle comprenant un moyen de compensation pour compenser l'apparition détectée d'un courant d'air inverse, de telle façon que le moyen de compensation (6, 8) détermine le gradient du signal du détecteur (v) et détecte des périodes de courant d'air inverse sur la base de la détermination de deux renversements du gradient depuis une valeur négative vers une valeur positive comprise entre des angles de l'embiellage prédéterminés ou durant un intervalle de temps prédéterminé, de plus, le moyen de contrôle (14) effectue un traitement du taux d'écoulement de l'air à l'entrée du moteur sur la base des taux d'écoulement d'air (Qa, Qc; Qb) mesurés à l'intérieur ou à l'extérieur des périodes découlement de l'air en sens inverse détectées, caractérisé en ce que:

ledit signal de sortie correspondant est de la forme d'une tension correspondant audit taux d'écoulement de l'air à l'entrée;

le moyen de compensation comprend un moyen d'échantillonnage (6) pour échantillonner la sortie dudit détecteur durant un intervalle de temps prédéterminé ou un angle de l'embiellage prédéterminé et pour fournir une sortie Vi, et un moyen de détermination (8) pour déterminer les deux renversements de gradient sur la base de la sortie Vi de ce moyen d'échantillonnage ou un taux d'écoulement de l'air Qi;

le moyen de contrôle (14) comprend un moyen de conversion (7) pour convertir la sortie Vi dudit moyen d'échantillonnage en un taux d'écoulement de l'air Qi, et un moyen de traitement (9) pour traiter un taux moyen d'écoulement de l'air en entrée Qo, et un circuit de contrôle (10) pour contrôler la quantité d'alimentation en carburant du moteur sur la base dudit taux d'écoulement de l'air en entrée Qo et la vitesse de rotation R du moteur; ledit moyen de traitement comprend un moyen de correction pour traiter ledit taux d'écoulement de l'air en entrée Qo, de façon à corriger la quantité d'alimentation en carburant, en accord avec la relation suivante:

$$(SMQ-SPQ)/DN,$$

dans cette relation: SMQ est l'addition de N valeurs échantillonnées du taux d'écoulement de l'air Qi au moment de la succion en-dehors des périodes d'écoulement de l'air en sens inverse (DN est un facteur numérique).

SPQ est l'addition de N valeurs échantillonnées du taux d'écoulement de l'air Qi au moment de la succion durant les périodes d'écoulement d'air inverse; et

le moyen de correction exécute ladite correction lorsque la vitesse du moteur est en dessous d'une valeur prédéterminée et lorsque le taux Qo/R, dudit taux moyen d'écoulement d'air en entrée Qo par ladite vitesse du moteur R, est au-dessus d'une valeur prédéterminée, le moyen de traitement comprenant un détecteur de température de refroidisseur (2) pour détecter la température du refroidisseur pour permettre au moteur que le signal de température soit utilisé comme un coefficient pour le calcul dudit taux Qo/R.

2. Système de commande de carburant pour un moteur à combustion interne selon la revendication 1, caractérisé en ce que le moyen de correction exécute ladite correction lorsque l'ouverture d'un clapet d'accélérateur disposé dans la course de la conduits d'entrée du moteur est au-dessus d'un degré prédéterminé.

3. Système de commande de carburant pour un moteur à combustion interne selon l'une des revendications 1 ou 2, caractérisé en ce que ledit moyen de détermination exécute la détermination seulement lorsque la sortie Vi du moyen d'échantillonnage est en dessous d'une valeur prédéterminée.

4. Système de commande de carburant pour un moteur à combustion interne selon l'une des revendications 1, 2 ou 3, caractérisé en ce que ledit moyen de détermination exécute ladite détermination seulement lorsque le taux d'écoulement de l'air en entrée Qi est en dessous d'une valeur prédéterminée.

5. Système de commande de carburant pour moteur à combustion interne selon l'une des revendications 1 à 4, caractérisé en ce que le moyen d'échantillonnage comprend une temporisation (21) générant un signal interrompu pour un intervalle de temps prédéterminé de façon à échantillonner la sortie dudit détecteur.

6. Système de commande de carburant pour moteur à combustion interne selon l'une des revendications 1 à 5, caractérisé en ce que ledit moyen de traitement comprend un détecteur d'angle d'embiellage (3) pour détecter le point-mort haut du moteur et un compteur (20) remis à zéro par un signal provenant dudit détecteur d'angle de l'embiellage de façon à mesurer un intervalle de temps relatif aux angles prédéterminés de l'embiellage du moteur.

7. Système de commande de carburant pour moteur à combustion interne selon l'une des revendications 1 à 6, caractérisé en ce que ledit moyen de traitement comprend une mémoire morte ou ROM (23) ayant inscrit en mémoire un programme de calcul pour déterminer la quantité d'alimentation en carburant en réponse aux conditions de fonctionnement du moteur.

FIG. 1A

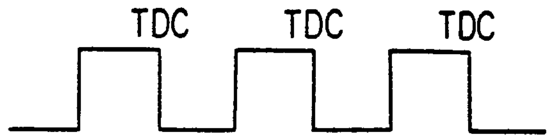


FIG. 1B

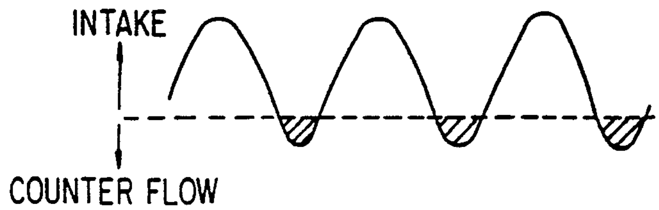


FIG. 2A

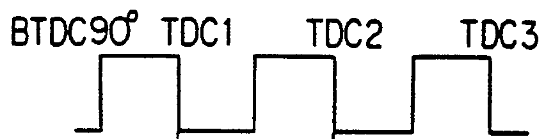


FIG. 2B

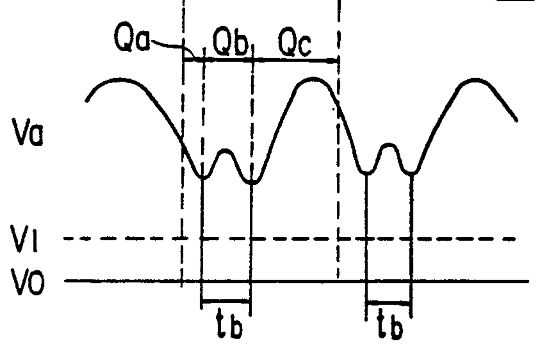


FIG. 5

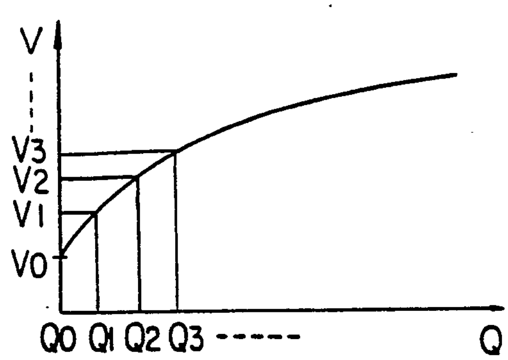

FIG. 3

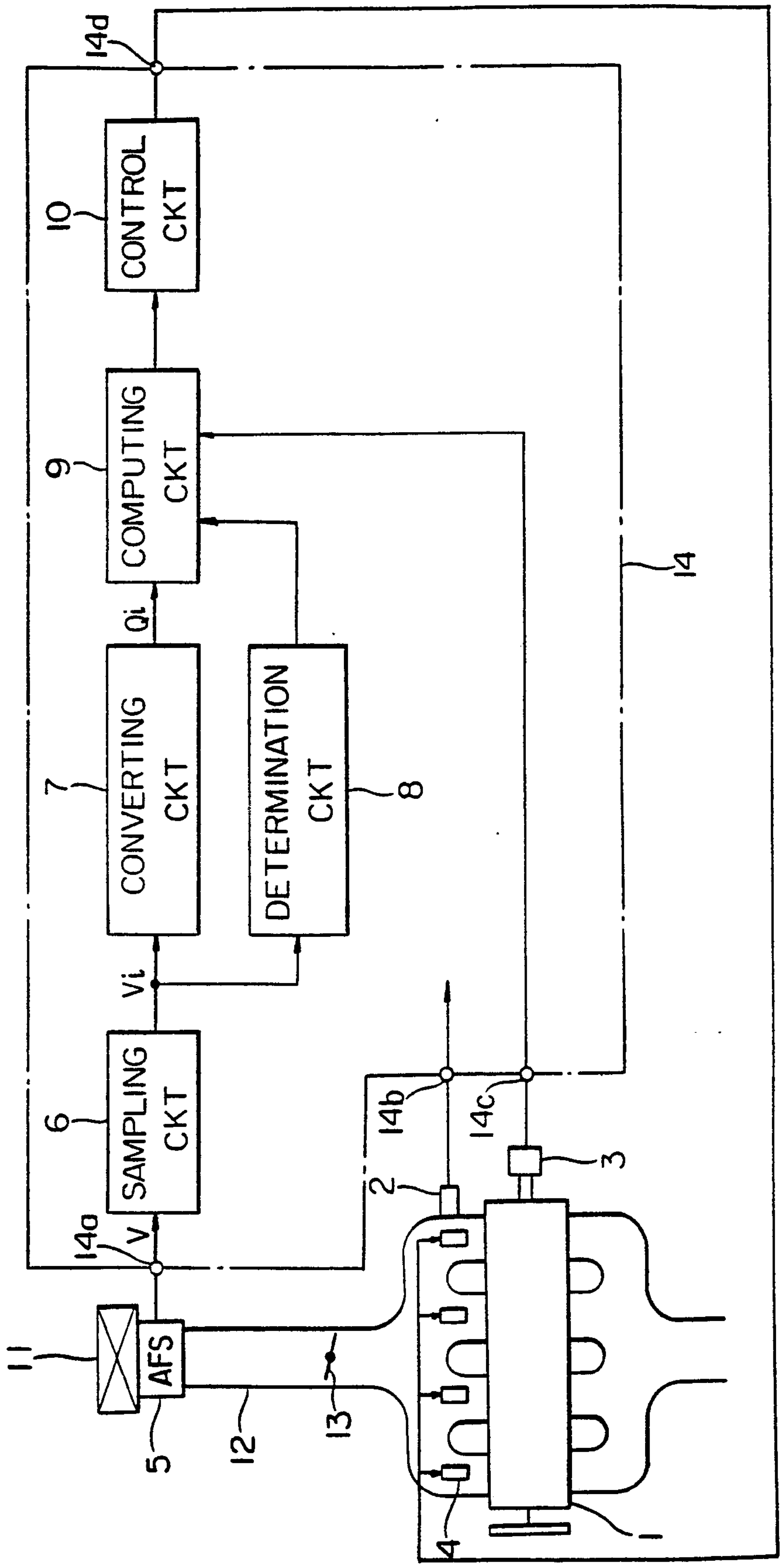
SAMPLING CKT
CONVERTING CKT
DETERMINATION CKT
COMPUTING CKT
CONTROL CKT
AFS
V
Vi
Qi
1
2
3
4
5
6
7
8
9
10
11
12
13
14
14a
14b
14c
14d

FIG. 4

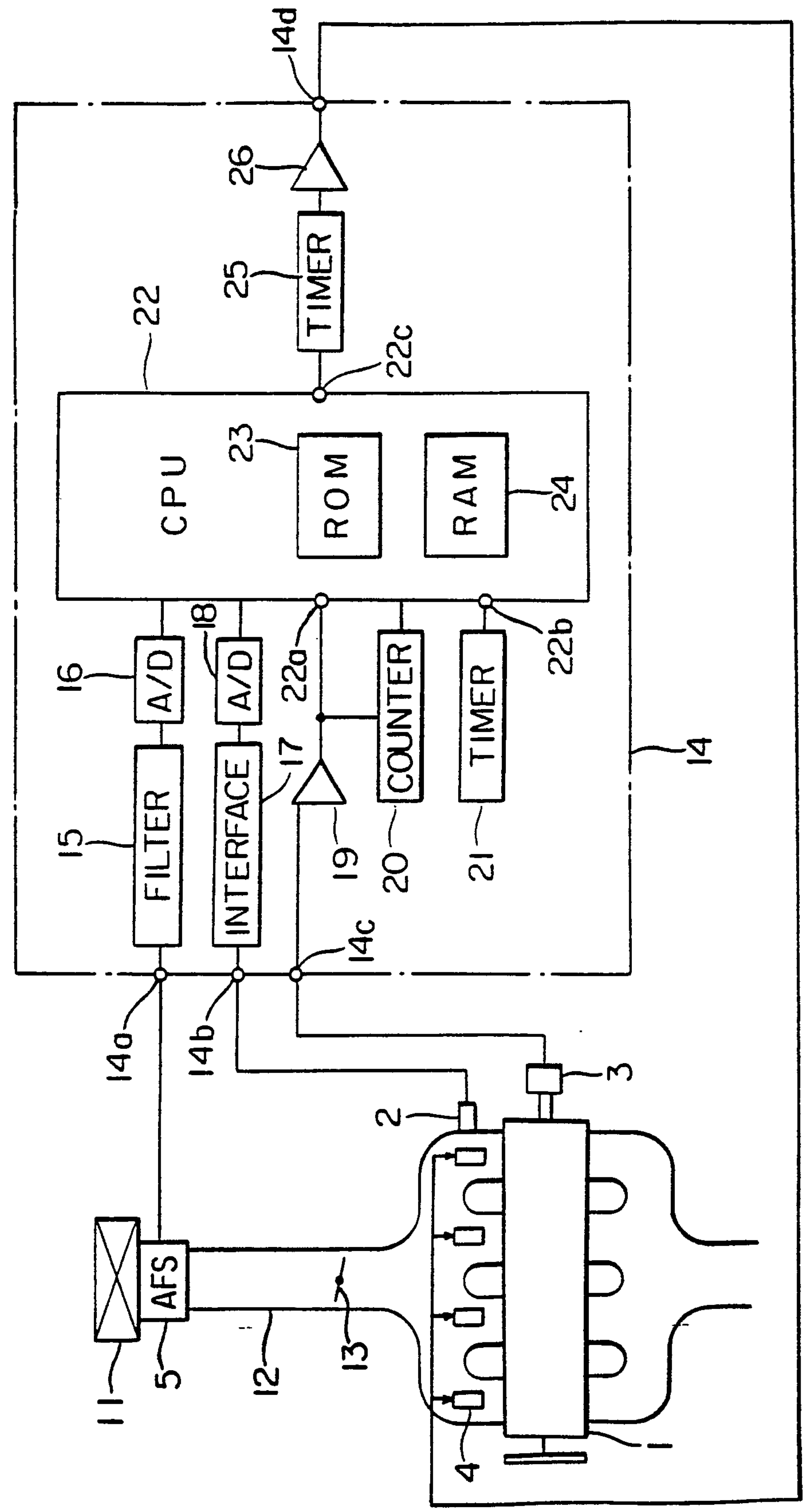
CPU
ROM
RAM
TIMER
FILTER
A/D
A/D
INTERFACE
COUNTER
TIMER
AFS
1
2
3
4
5
11
12
13
14
14a
14b
14c
14d
15
16
17
18
19
20
21
22
22a
22b
22c
23
24
25
26

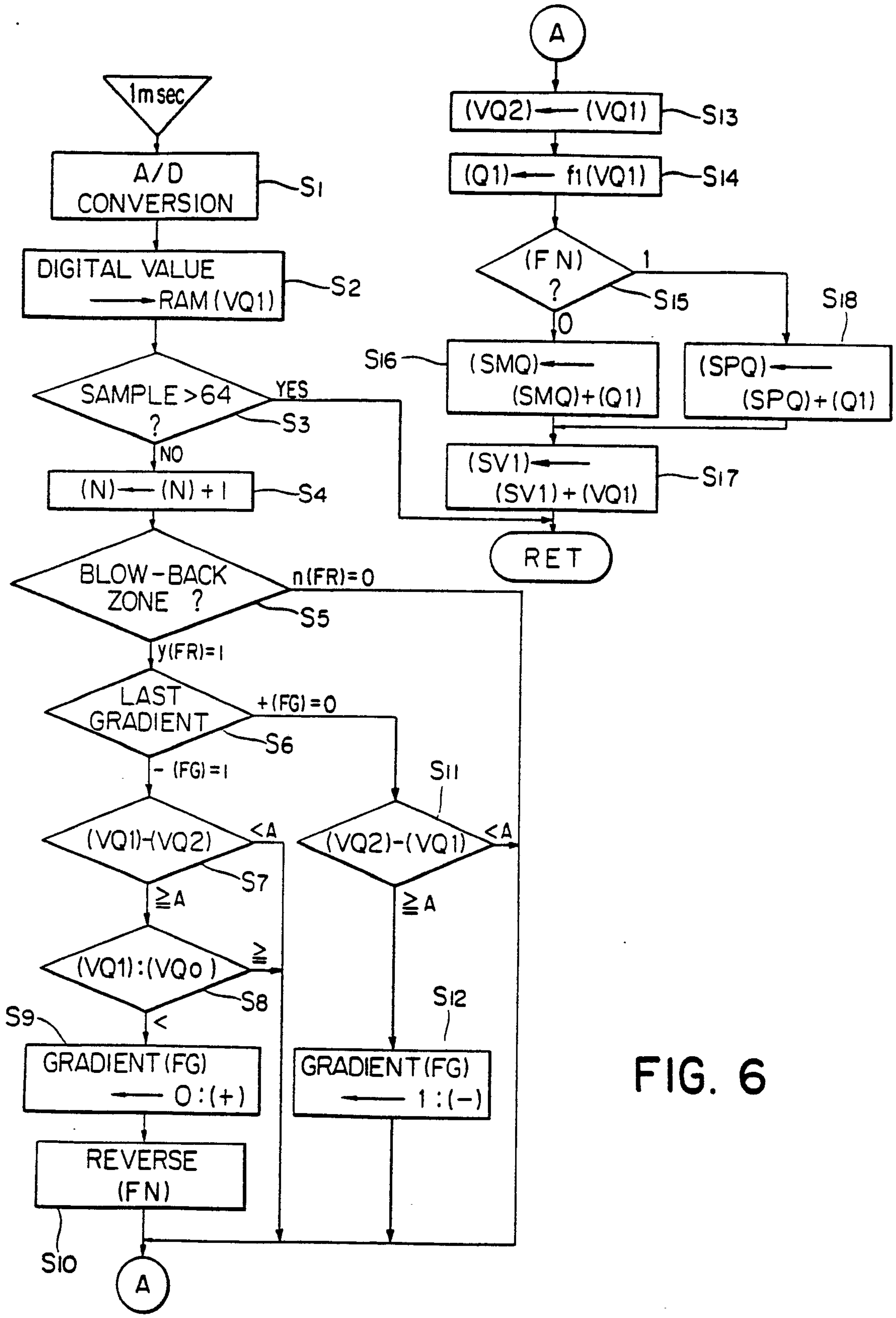
1msec
A/D CONVERSION
S1
DIGITAL VALUE → RAM (VQ1)
S2
SAMPLE > 64 ?
YES
S3
NO
(N) ← (N) + 1
S4
BLOW-BACK ZONE ?
n(FR)=0
S5
y(FR)=1
LAST GRADIENT
+(FG)=0
S6
-(FG)=1
(VQ1)-(VQ2)
<A
S7
≧A
(VQ1):(VQo)
≧
S8
<
S9
GRADIENT (FG) ← 0:(+)
REVERSE (FN)
S10
A
S11
(VQ2)-(VQ1)
<A
≧A
S12
GRADIENT (FG) ← 1:(-)
A
(VQ2) ← (VQ1)
S13
(Q1) ← f1(VQ1)
S14
(FN) ?
1
S15
0
S18
S16
(SMQ) ← (SMQ)+(Q1)
(SPQ) ← (SPQ)+(Q1)
(SV1) ← (SV1)+(VQ1)
S17
RET

FIG. 6

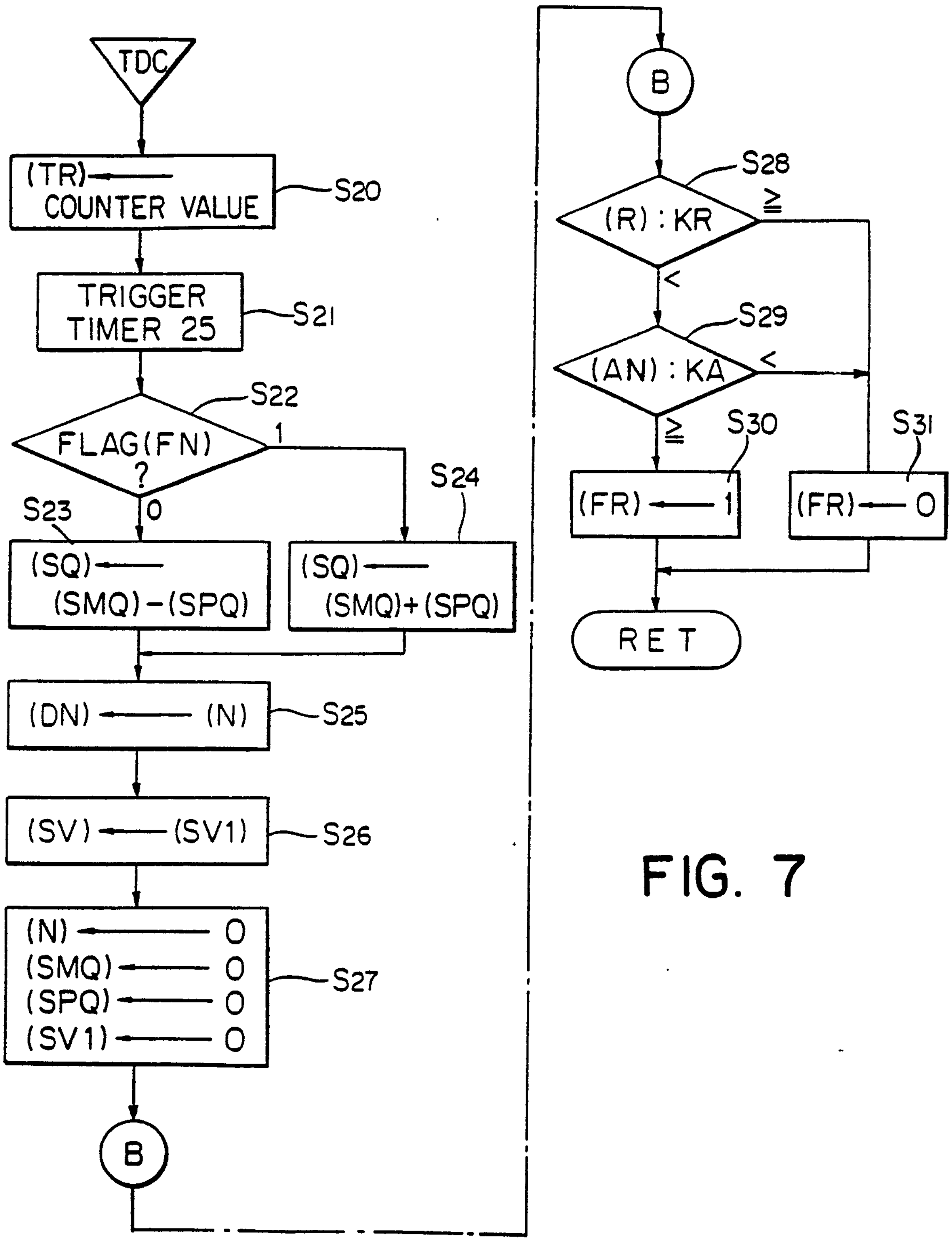
TDC
(TR) ← COUNTER VALUE
S20
TRIGGER TIMER 25
S21
FLAG(FN) ?
S22
1
0
S23
(SQ) ← (SMQ) − (SPQ)
S24
(SQ) ← (SMQ) + (SPQ)
(DN) ← (N)
S25
(SV) ← (SV1)
S26
(N) ← 0
(SMQ) ← 0
(SPQ) ← 0
(SV1) ← 0
S27
B
B
(R) : KR
S28
≧
<
(AN) : KA
S29
<
≧
S30
S31
(FR) ← 1
(FR) ← 0
RET

FIG. 7

FIG. 8A
FIG. 8B
FIG. 8C
FIG. 8D
FIG. 8E
FIG. 8F
FIG. 8G

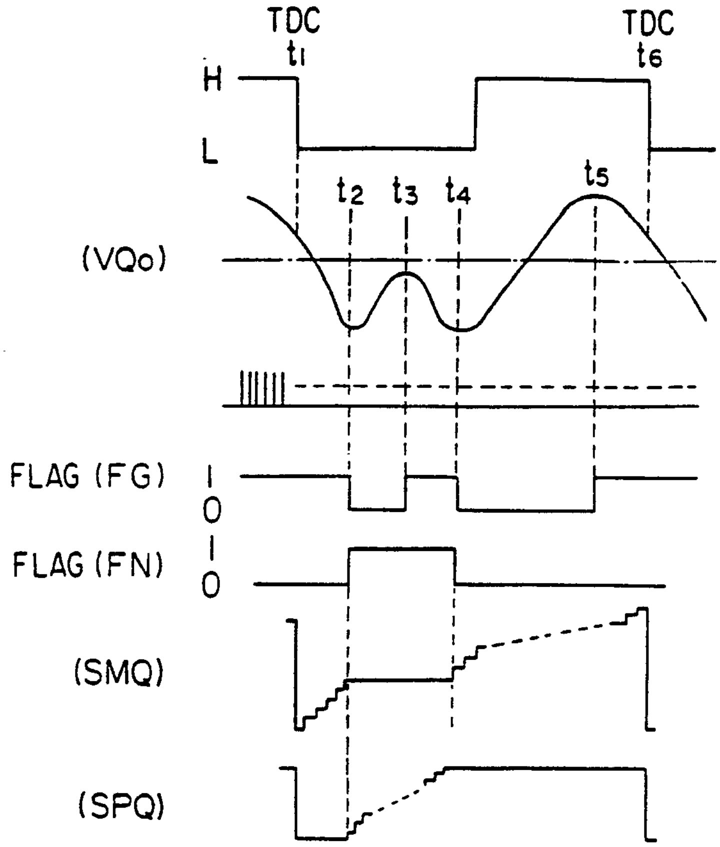


FIG. 9A
FIG. 9B
FIG. 9C
FIG. 9D
FIG. 9E
FIG. 9F
FIG. 9G

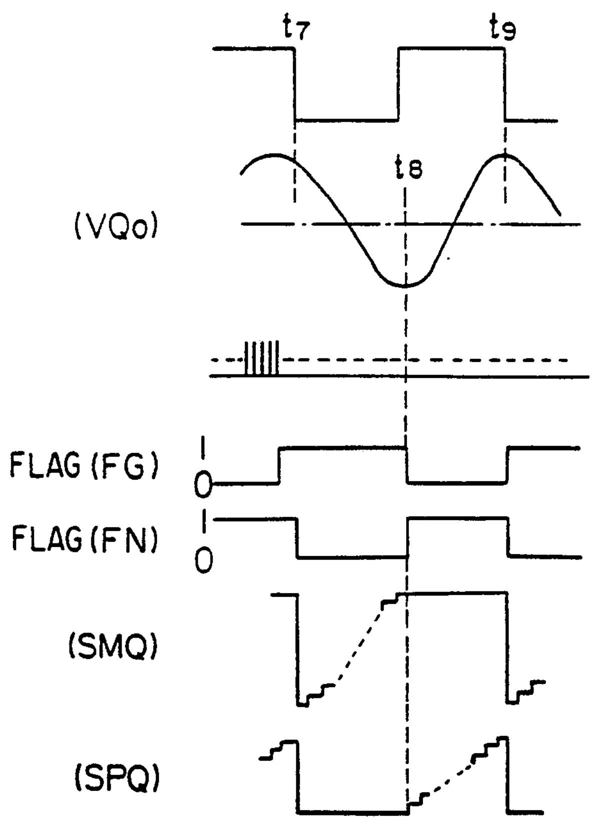

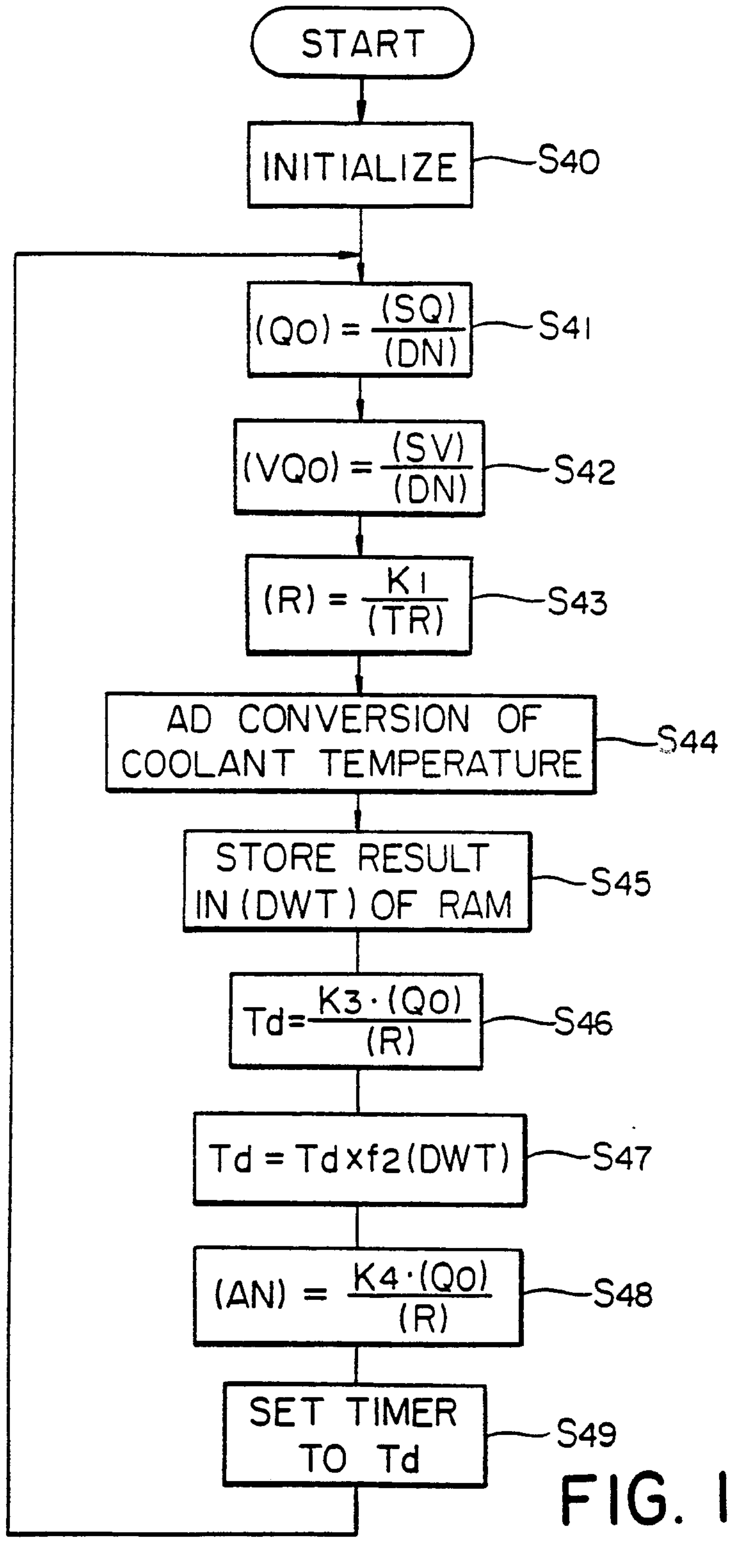
START
INITIALIZE
S40
(Qo) = (SQ)/(DN)
S41
(VQo) = (SV)/(DN)
S42
(R) = K1/(TR)
S43
AD CONVERSION OF COOLANT TEMPERATURE
S44
STORE RESULT IN (DWT) OF RAM
S45
Td=K3·(Qo)/(R)
S46
Td = Td×f2(DWT)
S47
(AN) = K4·(Qo)/(R)
S48
SET TIMER TO Td
S49

FIG. 10

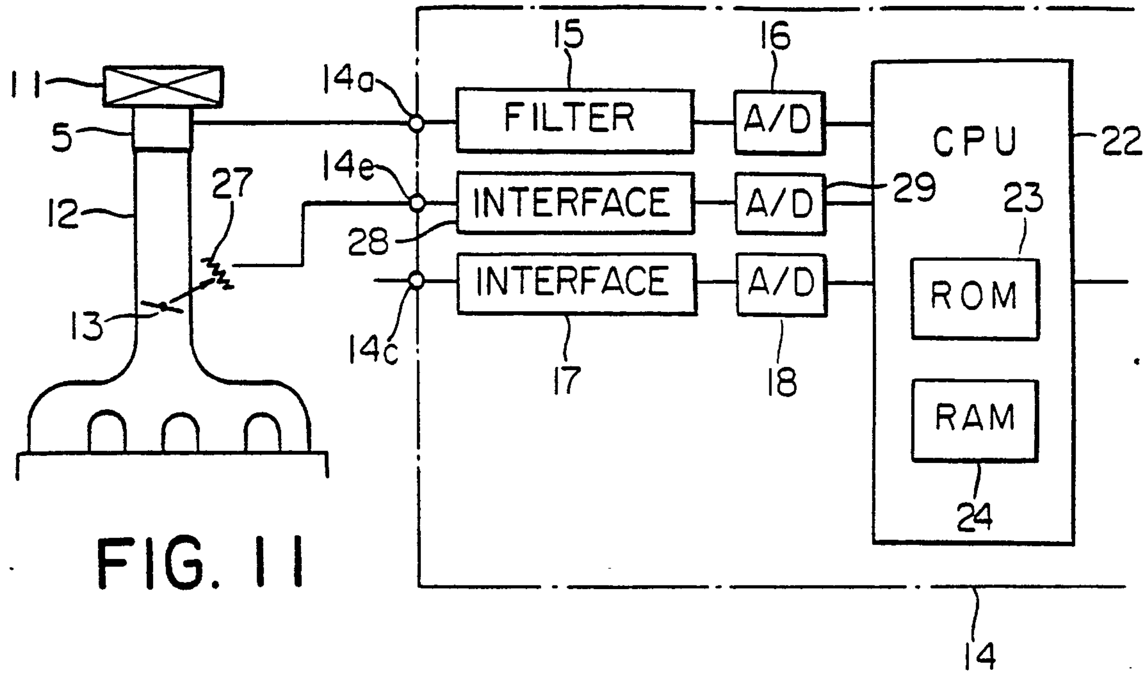
11
5
12
27
13
14a
14e
28
14c
15
FILTER
16
A/D
INTERFACE
A/D
INTERFACE
A/D
17
18
29
CPU
22
23
ROM
RAM
24
14

FIG. 11

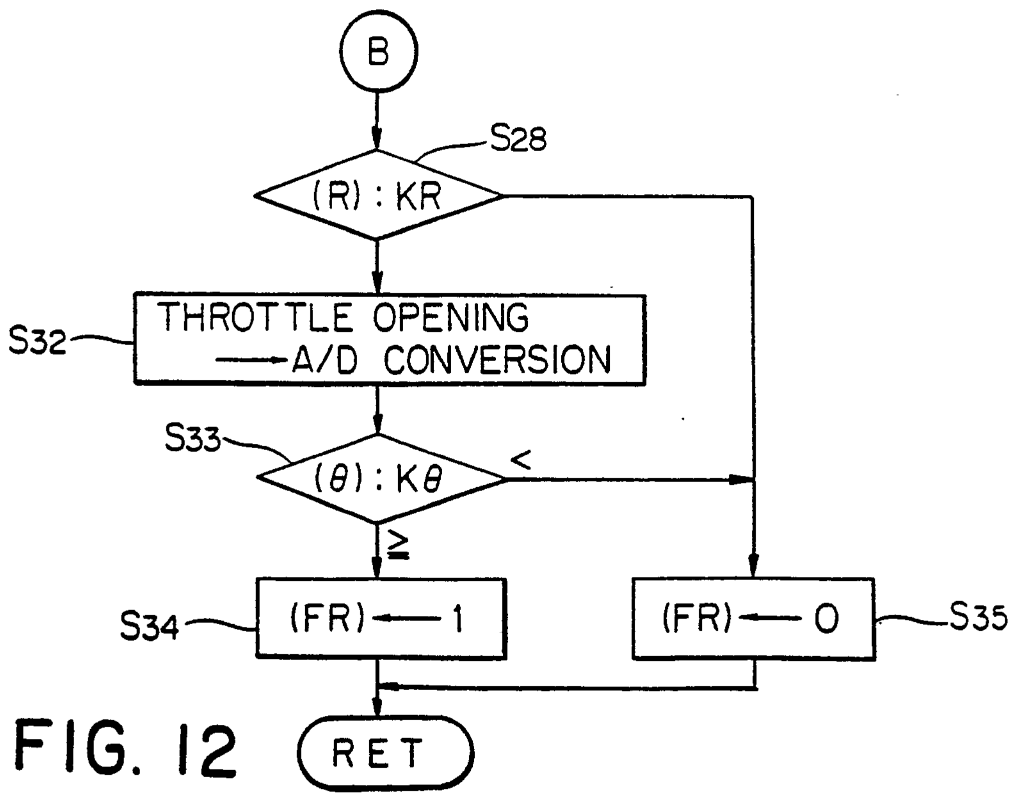
B
S28
(R) : KR
S32
THROTTLE OPENING
→A/D CONVERSION
S33
(θ) : Kθ
<
≥
S34
(FR)←1
(FR)←0
S35
RET

FIG. 12